# EUROPEAN PATENT SPECIFICATION

(11) **EP 3 770 057 B1**
(45) Date of publication and mention of the grant of the patent: **07.06.2023**
(21) Application number: 20789435.3
(22) Date of filing: 07.05.2020
(51) Int. Cl.: B63C 7/00, B23C 5/04

(54) **APPARATUS FOR DISCHARGING RESIDUAL OIL OF SUNKEN SHIP HAVING PERFORATED CUTTER FORMED THEREIN**
VORRICHTUNG ZUM ENTFERNEN VON RESTÖL EINES VERSUNKENEN SCHIFFES MIT EINEM DARIN GEBILDETEN PERFORIERTEN SCHNEIDER
APPAREIL POUR DÉCHARGER DE L'HUILE RÉSIDUELLE D'UN NAVIRE EN TRAIN DE COULER AYANT ÉTÉ PERFORÉ

(30) Priority: 28.05.2019 KR 20190062792
(43) Date of publication of application: 27.01.2021
(73) Proprietor: Korea Ocean Tech Co.,Ltd., Dong-gu Busan 48821 (KR)
(72) Inventor: CHEONG, Kwang Hyun, Yeongdo-gu Busan 49116 (KR)
(74) Representative: Caspary, Karsten
(86) International application number: PCT/KR2020/005984
(87) International publication number: WO 2020/242076

(56) References cited:
- EP-A1- 1 568 600
- WO-A1-2013/058424
- KR-A- 20160 087 621
- KR-A- 20180 005 980
- KR-B1- 101 845 072
- KR-B1- 102 043 977
- NO-B1- 335 267
- US-A- 4 284 110

## Description

### [Technical Field]

The present invention relates to a residual oil removing device for removing residual oil from a sinking ship that is capable of discharging the residual oil remaining in an oil tank of the sinking ship to the outside.

### [Background Art]

If a ship sinks or grounds due to marine accidents like collision with another ship, bad materials of the ship, and holes generated on the ship, a steel plate of an oil tank has to be bored as soon as possible to discharge oil from the ship to a given place, thereby preventing the occurrence of large-scale marine pollution accidents like oil or chemical leakage to the sea (hereinafter referred to as `oil leakage').

If a ship has a marine accident, in a conventional practice, a hole is formed on one side of an oil tank of the ship and a pump pipe is inserted into the hole. After that, the open hole is closed with a flange and a gasket and is then sealed by means of coupling of bolts one by one to the flange and the gasket. In an emergency where a prompt treatment is required, however, the time for installing the pump pipe becomes long, thereby undesirably making it difficult to perform the installation itself, and further, the time for installing a discharge pipe becomes delayed, so that the oil leakage accident cannot be prevented and suppressed more effectively.

So as to solve the problems occurring in the conventional practice, accordingly, a device for discharging residual oil from a sinking ship and for supplying air thereto is disclosed in Korean Patent Registration No. 10-1845072. In detail, the dual pipe type discharging device is prefabricated to a standardized size and is generally provided to government (ministry of public safety and security, marine environment management cooperation, etc.). If a ship sinks, a given hole is formed on a ship body, and then, the discharging device, which operates in one-touch way, is inserted into the hole formed on the ship body by means of non return hooking. If a locking nut just rotates, next, the oil discharging device is fixed to an outer peripheral wall of the oil tank in a state of being sealed well, so that it can be installed as soon as possible to allow various oil or chemicals to be discharged safely to the outside of the ship body, and so as to supply air to the oil tank to allow the ship body to float on the sea, further, a sleeve is coupled to a lower periphery of a body having an outer pipe connected to a valve and an inner pipe located inside the outer pipe in such a manner as to be connected to a valve, through a screw portion thereof. Furthermore, the sleeve has a screw portion formed on a side peripheral surface thereof in such a manner as to be coupled to the locking nut, and a fixing washer and a gasket are sequentially fitted to the underside of the locking nut. Moreover, the sleeve has a concave portion formed on a lower end periphery thereof in such a manner as to insert a piston ring whose one side is open and having a slant surface formed in an insertion direction thereinto, and upon insertion of the sleeve into the hole of the steel plate of the ship body, the piston ring is insertedly locked onto the hole by means of the outward elasticity thereof in one-touch way.

The above-mentioned conventional device, which is issued to the same applicant as this invention, forms the hole on the ship body within the shortest time and thus supplies compression air to the ship body through the hole if the ship on the sea sinks, thereby preventing the ship from sinking. So as to allow the sleeve to be easily lockedly inserted into the hole of the steel plate of the ship body, in this case, the piston ring inserted into the concave portion of the sleeve protrudes outward, so that as a diameter of the hole is smaller than a diameter of the piston ring, the piston ring is locked onto the entrance of the hole upon the insertion of the sleeve into the hole, thereby undesirably causing the time for fitting the piston ring to be delayed and also requiring a strong force for the fitting.

After the hole has been formed on the ship body to insert the sleeve into the hole, the sleeve is mounted onto the hole, thereby making it inconvenient to perform underwater work, and particularly, residual oil is discharged from the hole before the discharging device is mounted onto the hole, thereby undesirably causing marine pollution and giving harms to a worker.

Documents NO 335 267 81 and US 4 284 110 A show further residual oil removing devices.

### [Disclosure]

### [Technical Problem]

Accordingly, the present invention has been made to solve the above-mentioned problems, and it is an object of the present invention to provide a residual oil removing device for removing residual oil from a sinking ship that is capable of forming a hole on an oil tank body by means of a cutter ring coupled to a lower end periphery of a sleeve and simultaneously mounting the sleeve onto the hole of the oil tank body by means of fastening means located on an outer peripheral surface of the sleeve.

### [Technical Solution]

To accomplish the above-mentioned objects, according to the present invention, there is provided a residual oil removing device for removing residual oil from a sinking ship, including: a sleeve 10 inserted into an oil tank body 100 in such a manner as to allow compression air to be injected into the oil tank body to discharge the residual oil from the oil tank body 100; a cutter ring 30 coupled to a lower outer periphery of the sleeve 10 to form a hole 101 on the oil tank body 100; and fastening means 20 adapted to fixedly mount the sleeve 10 onto the hole 101, wherein the hole 101 is formed on the oil tank body 100 by means of the cutter ring 30 and simultaneously the sleeve 10 is fixedly mounted onto the hole 101 by means of the fastening means 20 on the inside and outside of the hole 101, wherein the hollow portion 17 is formed at an interior thereof in such a manner as to allow a suction pipe 2a of a fluid suction valve 2 to be insertedly passed therethrough; a fastening hole 18 is formed on a screw coupling portion 11 of the sleeve 10 in a lateral direction of the screw coupling portion 11 in such a manner as to allow the compression air injection valve 3 to be fastened thereto; and an injection hole 19 is formed at the outside of the hollow portion 17 in such a manner as to communicate with the fastening hole 18 to allow compression air to be injected therefrom.

Also, the sleeve 10 includes: an upper body 12 having a screw coupling portion 11 formed on an outer peripheral surface thereof in such a manner as to be coupled to a drilling machine 200; a sleeve insertion portion 15 extended downward from the upper body 12 and having a plurality of operating holes 13 adapted to mount the fastening means 20 thereonto; and a cutter coupling portion 16 formed steppedly inward from an outer periphery of the sleeve insertion portion 15 in such a manner as to allow the cutter ring 30 to be coupled to the front end periphery of the lower outer periphery of the sleeve 10.

Further, the sleeve 10 includes: a screw coupling portion 17a formed on an inner upper peripheral surface of the hollow portion 17 in such a manner as to allow the fluid suction valve 2 to be coupled thereto; and a screw coupling portion 18a formed on an inner peripheral surface of the fastening hole 18 in such a manner as to allow the compression air injection valve 3 to be coupled thereto.

Furthermore, the fastening means 20 includes: a plurality of locking pieces 21 hinge-coupled to the plurality of operating holes 13 in such a manner as to be elastically inserted or drawn into or from the plurality of operating holes 13; elastic springs 22 located between the locking pieces 21 and the operating holes 13 in such a manner as to elastically support the locking pieces 21 against the operating holes 13; and a locking nut 23 and a packing 24 coupled to an outer periphery of the screw coupling portion 11 of the upper body 12, if the sleeve insertion portion 15 is locked onto an inner periphery of the hole 101, to fix the locked state of the sleeve insertion portion 15 on the outside of the oil tank body 100.

In addition, each locking piece 21 includes: a hinge hole 21a formed on a lower portion thereof in such a manner as to be coupled to the pin hole 14 of the corresponding operating hole 13 by means of a pin; a locking protrusion 21b protruding from one side of an upper portion thereof in such a manner as to be locked onto an upper portion of the corresponding operating hole 13 to limit changeable operations thereof and to prevent the locking piece 21 from escaping from the operating hole 13; a locking surface 21c formed on the other side of the upper portion thereof in such a manner as to be locked onto an end periphery of the hole 101; and an elastic support groove 21d formed on a center of the other side thereof in such a manner as to insert the elastic spring 22 thereinto and to elastically support the elastic spring 22 thereagainst.

Also, the cutter ring 30 includes a screw connection portion 31 formed on an inner upper peripheral surface thereof in such a manner as to be coupled to the cutter coupling portion 16 of the sleeve 10 and a plurality of blades 33 protruding downward from the bottom end periphery thereof, the cutter ring 30 having the same outer diameter d1 as the sleeve insertion portion 15 so that the sleeve insertion portion 15 onto which the fastening means 20 is mounted is inserted into the hole 101 formed by means of the cutter ring 30.

### [Advantageous Effects]

According to the present invention, the residual oil removing device for removing residual oil remaining in the sinking ship can perform the hole forming work on the oil tank body and the sleeve mounting and fixing work to the oil tank body, simultaneously, thereby providing very fast installation work and excellent workability.

In addition, the residual oil removing device for removing residual oil remaining in the sinking ship according to the present invention can allow the sleeve to be coupled to the hole, while being passed through the hole, after the hole has been formed, thereby preventing the residual oil from leaking to the outside through the hole, avoiding marine pollution, and ensuring the safety of the worker.

### [Description of Drawings]

FIG.1 is a perspective view showing a residual oil removing device for removing residual oil from a sinking ship according to the present invention.
FIG.2 is an exploded perspective view showing the residual oil removing device for removing residual oil from a sinking ship according to the present invention.
FIG.3 is a sectional view showing the residual oil removing device for removing residual oil from a sinking ship according to the present invention.

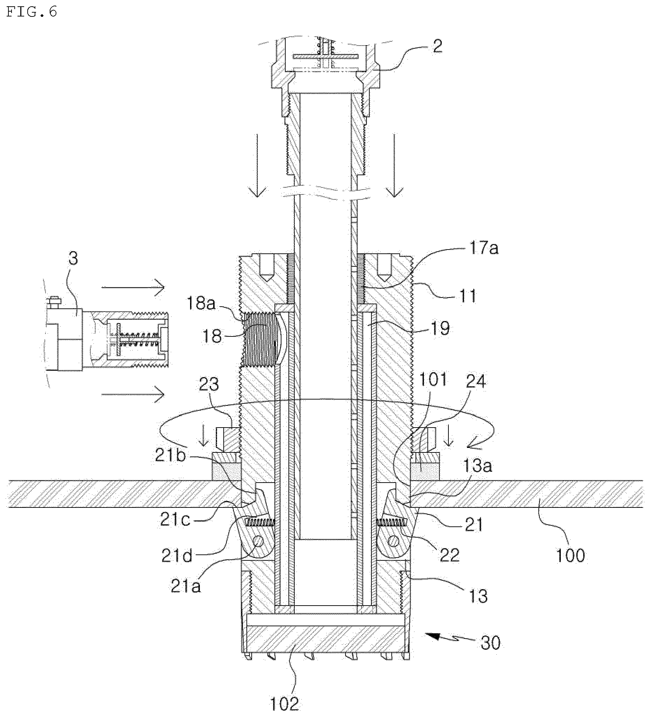

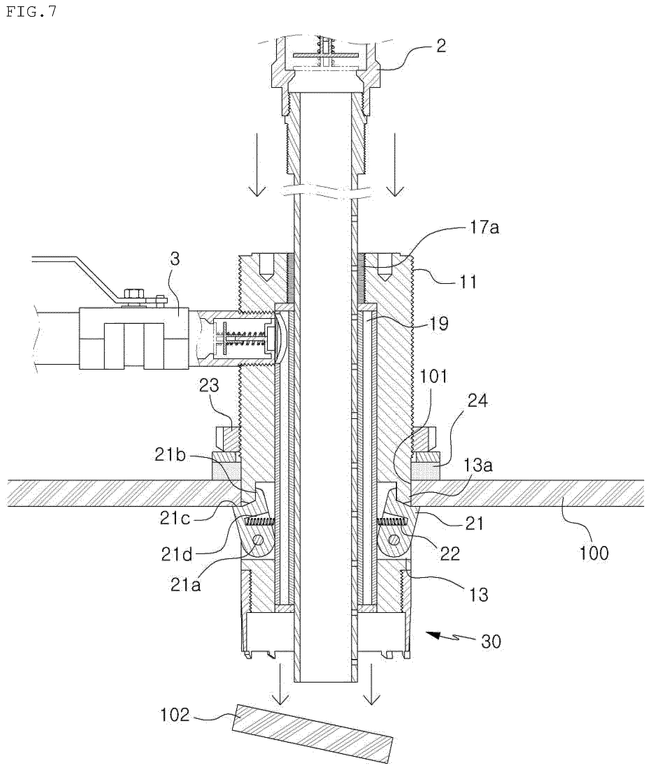

FIGS.4 to 7 are sectional views showing installation processes of the residual oil removing device for removing residual oil from a sinking ship according to the present invention.
FIG.8 is a sectional view showing the use state of the residual oil removing device for removing residual oil from a sinking ship according to the present invention.

### [Best Mode for Invention]

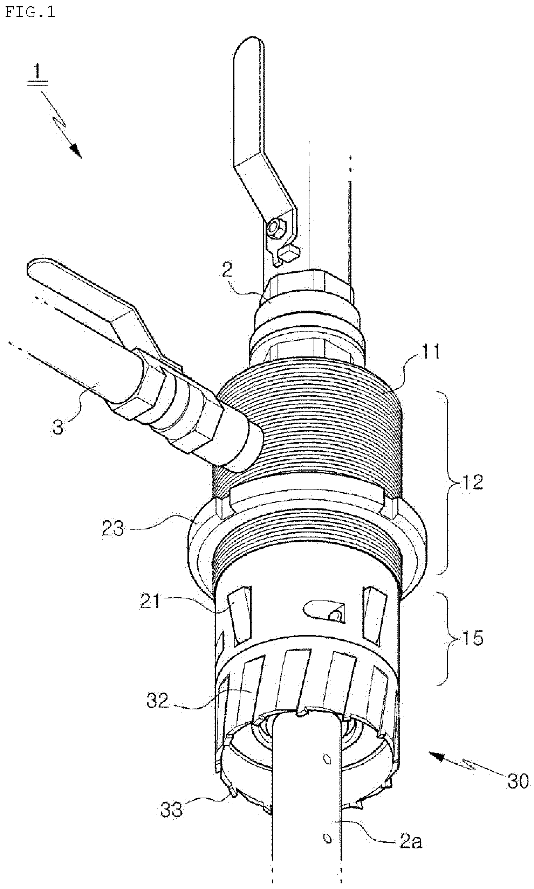

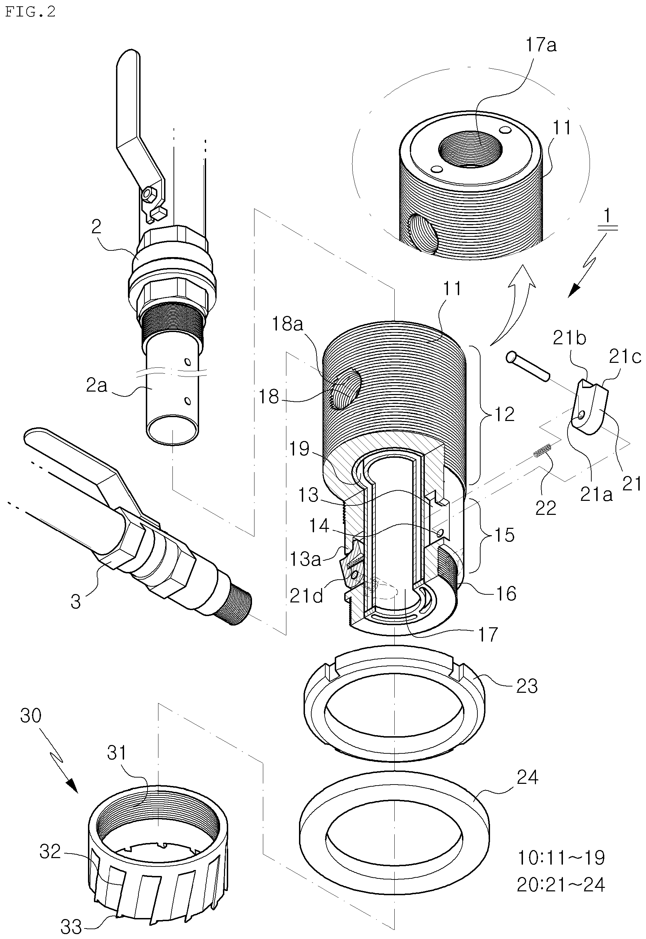

Hereinafter, the present invention will now be described in detail with reference to the attached drawings. FIG.1 is a perspective view showing a residual oil removing device for removing residual oil from a sinking ship according to the present invention, and FIG.2 is an exploded perspective view showing the residual oil removing device for removing residual oil from a sinking ship according to the present invention.

A residual oil removing device 1 for removing residual oil from a sinking ship according to the present invention includes a sleeve 10 inserted into a hole 101 formed on an oil tank body 100 in such a manner as to allow a fluid suction valve 2 and a compression air injection valve 3 to be mounted thereonto, fastening means 20 fitted to the sleeve 10 in such a manner as to allow the sleeve 10 to be fixedly mounted to the hole 101 of the oil tank body 100, and a cutter ring 30 coupled to the front end periphery of a lower periphery of the sleeve 10 to form the hole 101 on the oil tank body 100.

The sleeve 10 includes an upper body 12 having a screw coupling portion 11 formed on an outer peripheral surface thereof in such a manner as to be coupled to a drilling machine 200, a sleeve insertion portion 15 extended downward from the upper body 12 and having a plurality of operating holes 13 adapted to mount the fastening means 20 thereonto and a plurality of pin holes 14 formed orthogonal with respect to the operating holes 13, and a cutter coupling portion 16 formed steppedly inward from an outer periphery of the sleeve insertion portion 15 in such a manner as to allow the cutter ring 30 to be coupled to the front end periphery of the lower outer periphery of the sleeve 10.

Further, the sleeve 10 includes a hollow portion 17 formed at an interior thereof in such a manner as to allow a suction pipe 2a of the fluid suction valve 2 to be insertedly passed therethrough, a fastening hole 18 formed on the screw coupling portion 11 in a side direction of the screw coupling portion 11 in such a manner as to allow the compression air injection valve 3 to be fastened thereto, and an injection hole 19 formed at the outside of the hollow portion 17 in such a manner as to communicate with the fastening hole 18 to allow compression air to be injected therefrom.

Further, the hollow portion 17 has a screw coupling portion 17a formed on an inner upper peripheral surface thereof in such a manner as to allow the fluid suction valve 2 to be coupled thereto, and the fastening hole 18 has a screw coupling portion 18a formed on an inner peripheral surface thereof in such a manner as to allow the compression air injection valve 3 to be coupled thereto.

The fastening means 20 includes a plurality of locking pieces 21 hinge-coupled to the plurality of operating holes 13 to fix the sleeve insertion portion 15 of the sleeve 10 to the hole 101 after the sleeve insertion portion 15 of the sleeve 10 is inserted into the hole 101 of the oil tank body 100, elastic springs 22 located between the locking pieces 21 and the operating holes 13 in such a manner as to elastically support the locking pieces 21 against the operating holes 13, and a locking nut 23 and a packing 24 coupled to an outer periphery of the screw coupling portion 11 of the upper body 12, if the sleeve insertion portion 15 is locked onto the inner periphery of the hole 101, to fix the locked state of the sleeve insertion portion 15 on the outside of the oil tank body 100.

Each locking piece 21 includes a hinge hole 21a formed on a lower portion thereof in such a manner as to be coupled to the pin hole 14 of the corresponding operating hole 13 by means of a pin, a locking protrusion 21b protruding from one side of an upper portion thereof in such a manner as to be locked onto an upper portion of the corresponding operating hole 13 to limit changeable operations thereof and to prevent the locking piece 21 from escaping from the operating hole 13, a locking surface 21c formed on the other side of the upper portion thereof in such a manner as to be locked onto an end periphery of the hole 101, and an elastic support groove 21d formed on a center of the other side thereof in such a manner as to insert the elastic spring 22 thereinto and to elastically support the elastic spring 22 thereagainst.

Further, each operating hole 13 of the sleeve insertion portion 15 desirably has a locking protrusion 13a protruding downward from an upper periphery thereof in such a manner as to be locked onto the locking protrusion 21d of the locking piece 21 to limit an operating radius of the locking piece 21.

The cutter ring 30 is coupled to the front end periphery of the lower periphery of the sleeve 10 so as to form the hole 101 on the oil tank body 100 and simultaneously to insertedly mount the sleeve insertion portion 15 of the sleeve 10 onto the hole 101, and the cutter ring 30 and the sleeve insertion portion 15 have the same outer diameter d1 as each other so that the sleeve insertion portion 15 can be inserted into the hole 101 formed by means of the cutter ring 30.

Further, the cutter ring 30 includes a screw connection portion 31 formed on an inner upper peripheral surface thereof in such a manner as to be coupled to the cutter coupling portion 16 of the sleeve 10, a plurality of cutter grooves 32 formed on an outer lower peripheral surface thereof, and a plurality of blades 33 protruding downward from the bottom ends of the cutter grooves 32.

The cutter ring 30 is coupled integrally with the lower end periphery of the sleeve 10, and if the screw coupling portion 11 of the sleeve 10 is connected to the drilling machine 200, the sleeve 10 rotates to allow the cutter ring 30 to form the hole 101 on the oil tank body 100. Next, if the sleeve insertion portion 15 is inserted into the hole 101, the fastening means 20 is locked onto the inner periphery of the hole 101, thereby finishing mounting the sleeve 10 onto the hole 101.

Furthermore, the fluid suction valve 2 and the compression air injection valve 3 include non-return valves 4 for preventing a fluid from flowing back, respectively.

Under the above-mentioned configuration, now, an explanation on an operation of the residual oil removing device according to the present invention will be given.

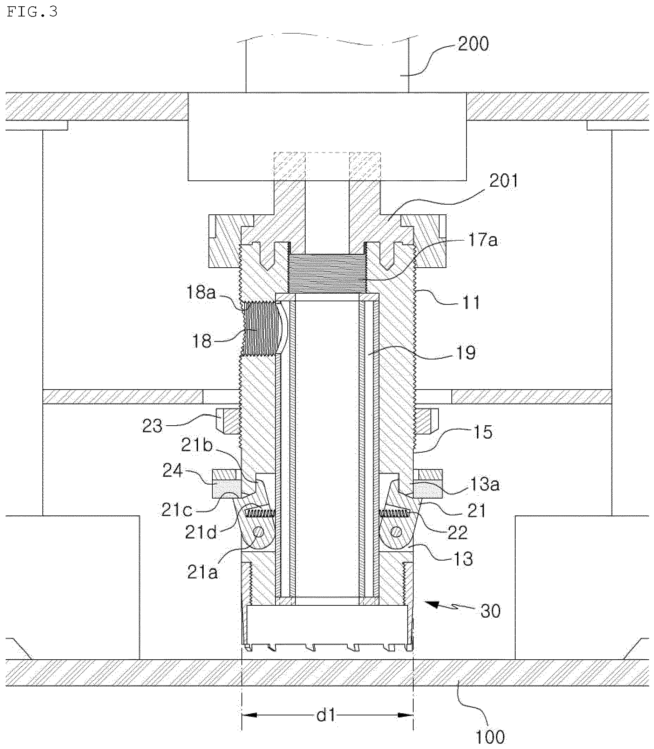

As shown in FIG.3, the residual oil removing device according to the present invention is configured to allow the cutter ring 30 to be coupled integrally with the lower end periphery of the sleeve 10 so as to form the hole 101 on the oil tank body of a sinking ship due to a marine accident and to allow the sleeve 10 to be inserted into the hole 101, simultaneously, and in this case, the drilling machine 200 is fastened to the upper periphery of the sleeve 10. According to the present invention, the screw coupling portion 11 of the sleeve 10 is coupled to a rotary shaft 201 of the drilling machine 200, so that the sleeve 10 and the drilling machine 200 can be simply connected to each other.

In this case, the locking pieces 21 of the fastening means 20 operate radially inward and outward from the outer peripheral surface of the sleeve insertion portion 15, and the cutter ring 30 is coupled integrally with the cutter coupling portion 16 formed steppedly inward from the outer periphery of the sleeve insertion portion 15.

In a state where the drilling machine 200 comes into close contact with the oil tank body 100 after the sleeve 10 has been coupled to the drilling machine 200, if the drilling machine 200 operates, the cutter ring 30 coupled to the lower end periphery of the sleeve 10 rotates to form the hole 101 on the oil tank body 100.

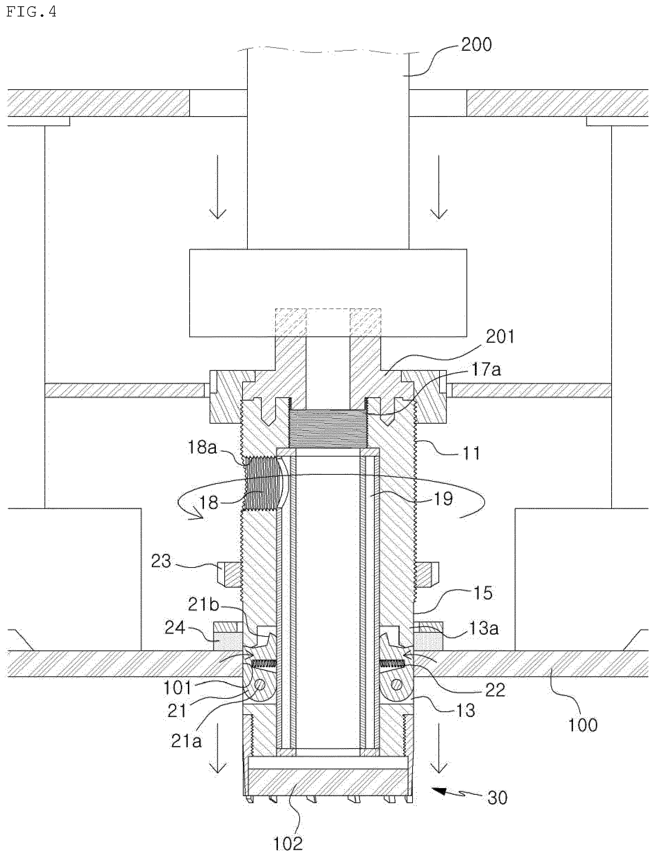

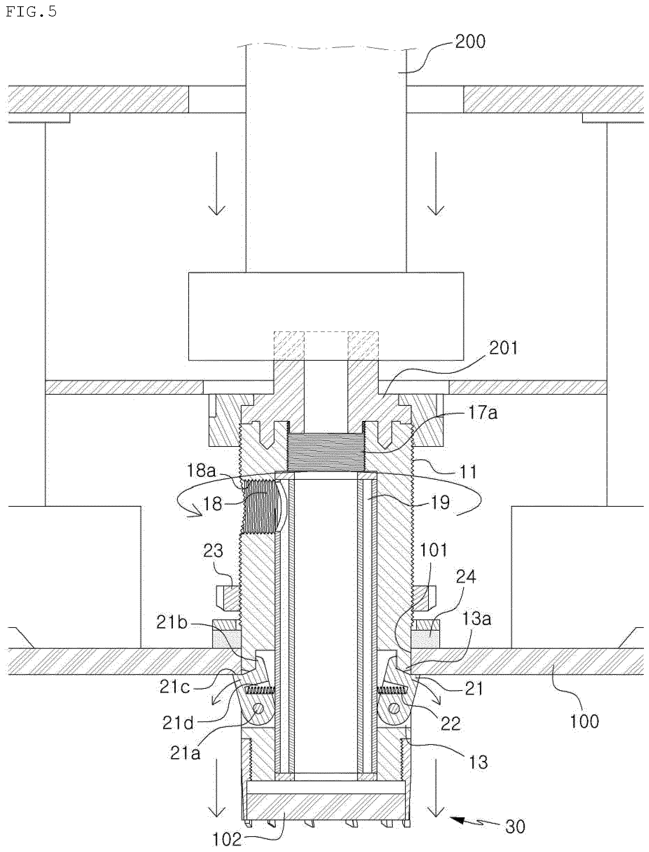

If the hole 101 is formed by means of the cutter ring 30, as shown in FIG.4, the sleeve 10 is inserted into the hole 101 further down, and as the sleeve insertion portion 15 is inserted into the hole 101, as shown in FIG.5, the locking pieces 21 of the fastening means 20 pass through the hole 101. Simultaneously, they are lockedly fastened to the hole 101.

After that, the locking nut 23 rotates to pressurize the oil tank body 100 thereagainst on the outside of the oil tank body 100 of the opposite side to the locking pieces 21, and accordingly, the sleeve 10 is firmly fixed to the oil tank body 100 in a sealed state, while being passed through the hole 101 of the oil tank body 100.

In this case, each locking piece 21 is configured to have the lower side to be hinge-coupled to the pin hole 14, while the upper side thereof is being slant tapered downward by means of the elastic spring 22, and if the locking pieces 21 are inserted into the hole 101, they are naturally pressurized against the hole 101 and are thus inserted into the operating holes 13 of the sleeve insertion portion 15. Next, after they are passed through the hole 101, they are drawn by means of the elastic operations of the elastic springs 22, so that the locking surfaces 21c are thus locked onto the inner peripheral surface of the hole 101.

According to the present invention, further, the sleeve 10 is kept sealedly coupled to the hole 101 in the state of being passed through the hole 101 even just after the hole 101 is formed on the oil tank body 100 by means of the cutter ring 30, thereby preventing oil from leaking to the outside of the oil tank body 100.

If the sleeve 10 is mounted onto the oil tank body 100, the drilling machine 200 is removed from the sleeve 10, and the fluid suction valve 2 and the compression air injection valve 3 are simply coupled to the sleeve 10. In this case, a cut plate 101 is sealedly inserted into the cutter ring 30 when the hole 101 is formed, and so as to mount the fluid suction valve 2, the suction pipe 2a is first inserted into the hole 101 to push and remove the cut plate 102. Simultaneously, the fluid suction valve 2 is coupled to the screw coupling portion 17a of the hollow portion 17 of the upper body 12, so that it can be mounted onto the sleeve 10, without any oil leakage.

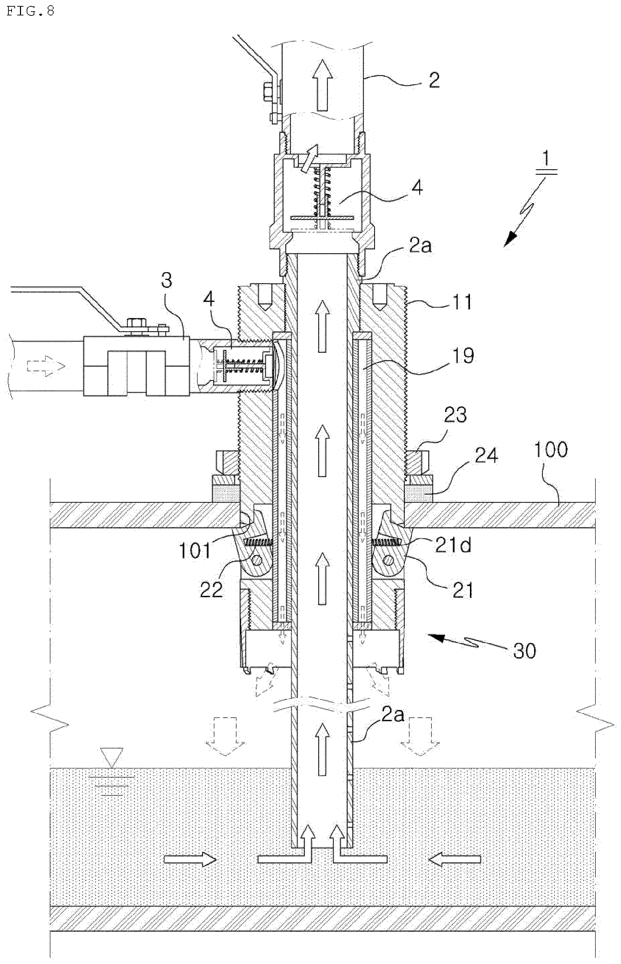

According to the present invention, as shown in FIG.8, the residual oil removing device can form the hole 101 on the oil tank ship 100 and simultaneously mount the sleeve 10 into the hole 101 quickly and conveniently, and through first and second control valves of the fluid suction valve 2 and the compression air injection valve 3, high pressure air is forcedly supplied through the upper body 12 of the sleeve 10 and is applied to the oil in the oil tank body 100, so that the oil is discharged to a collection tank provided on the outside through a residual oil suction pipe.

While the present invention has been described with reference to the particular illustrative embodiments, it is not to be restricted by the embodiments but only by the appended claims.

### [Industrial Applicability]

According to the present invention, the residual oil removing device for removing residual oil remaining in the sinking ship can form the hole on the oil tank body by means of the cutter ring coupled to the lower end periphery of the sleeve and can be mounted onto the oil tank body by means of the fastening means provided on the outer peripheral surface of the sleeve, thereby providing excellent workability and wide applicability in discharging the residual oil from the sinking ship, without any leakage.

## Claims

1. A residual oil removing device for removing residual oil from a sinking ship, comprising:
a sleeve (10) insertable into an oil tank body (100) in such a manner as to allow compression air to be injected into the oil tank body to discharge the residual oil from the oil tank body (100), wherein the sleeve (10) comprises a hollow portion (17);
a cutter ring (30) coupled to a lower outer periphery of the sleeve (10) to form a hole (101) on the oil tank body (100); and
fastening means (20) adapted to fixedly mount the sleeve (10) onto the hole (101),
wherein the hole (101) is formed on the oil tank body (100) by means of the cutter ring (30) and simultaneously the sleeve (10) is fixedly mounted onto the hole (101) by means of the fastening means (20) on the inside and outside of the hole (101),
**characterized in that**
the hollow portion (17) is formed at an interior thereof in such a manner as to allow a suction pipe (2a) of a fluid suction valve (2) to be insertedly passed therethrough; a fastening hole (18) is formed on a screw coupling portion (11) of the sleeve (10) in a lateral direction of the screw coupling portion (11) in such a manner as to allow the compression air injection valve (3) to be fastened thereto; and an injection hole (19) is formed at the outside of the hollow portion (17) in such a manner as to communicate with the fastening hole (18) to allow compression air to be injected therefrom.

2. The residual oil removing device according to claim 1, wherein the sleeve (10) comprises:
an upper body (12) having the screw coupling portion (11) formed on an outer peripheral surface thereof in such a manner as to be coupled to a drilling machine (200);
a sleeve insertion portion (15) extended downward from the upper body (12) and having a plurality of operating holes (13) adapted to mount the fastening means (20) thereonto; and
a cutter coupling portion (16) formed steppedly inward from an outer periphery of the sleeve insertion portion (15) in such a manner as to allow the cutter ring (30) to be coupled to the front end periphery of the lower outer periphery of the sleeve (10).

3. The residual oil removing device according to claim 2, wherein the sleeve (10) comprises:
a screw coupling portion (17a) formed on an inner upper peripheral surface of the hollow portion (17) in such a manner as to allow the fluid suction valve (2) to be coupled thereto; and
a screw coupling portion (18a) formed on an inner peripheral surface of the fastening hole (18) in such a manner as to allow the compression air injection valve (3) to be coupled thereto.

4. The residual oil removing device according to claim 1 or 2, wherein the fastening means (20) comprises:
a plurality of locking pieces (21) hinge-coupled to the plurality of operating holes (13) in such a manner as to be elastically inserted or drawn into or from the plurality of operating holes (13);
elastic springs (22) located between the locking pieces (21) and the operating holes (13) in such a manner as to elastically support the locking pieces (21) against the operating holes (13); and
a locking nut (23) and a packing (24) coupled to an outer periphery of the screw coupling portion (11) of the upper body (12), if the sleeve insertion portion (15) is locked onto an inner periphery of the hole (101), to fix the locked state of the sleeve insertion portion (15) on the outside of the oil tank body (100).

5. The residual oil removing device according to claim 4, wherein each locking piece (21) comprises:
a hinge hole (21a) formed on a lower portion thereof in such a manner as to be coupled to the pin hole (14) of the corresponding operating hole (13) by means of a pin;
a locking protrusion (21b) protruding from one side of an upper portion thereof in such a manner as to be locked onto an upper portion of the corresponding operating hole (13) to limit changeable operations thereof and to prevent the locking piece (21) from escaping from the operating hole (13);
a locking surface (21c) formed on the other side of the upper portion thereof in such a manner as to be locked onto an end periphery of the hole (101); and
an elastic support groove (21d) formed on a center of the other side thereof in such a manner as to insert the elastic spring (22) thereinto and to elastically support the elastic spring (22) thereagainst.

6. The residual oil removing device according to claim 1 or 2, wherein the cutter ring (30) comprises a screw connection portion (31) formed on an inner upper peripheral surface thereof in such a manner as to be coupled to the cutter coupling portion (16) of the sleeve (10) and a plurality of blades (33) protruding downward from the bottom end periphery thereof, the cutter ring (30) having the same outer diameter (d1) as the sleeve insertion portion (15) so that the sleeve insertion portion (15) onto which the fastening means (20) is mounted is inserted into the hole (101) formed by means of the cutter ring (30).

## Patentansprüche

1. Restöl-Entfernungsvorrichtung zum Entfernen von Restöl aus einem sinkenden Schiff, mit:
einer Manschette (10), die in einen Ölbehälterkörper (100) derart einsetzbar ist, um zu ermöglichen, dass Druckluft in den Ölbehälterkörper injiziert wird, um das Restöl aus dem Ölbehälterkörper (100) auszuleiten, wobei die Manschette (10) einen hohlen Abschnitt (17) aufweist;
einem Schneidring (30), der mit einem unteren Außenumfangsabschnitt der Manschette (10) gekoppelt ist, um eine Öffnung (101) in dem Ölbehälterkörper (100) zu bilden; und
Befestigungsmitteln (20), die dazu eingerichtet sind, die Manschette (10) an der Öffnung (101) zu fixieren, wobei die Öffnung (101) in dem Ölbehälterkörper (100) mit dem Schneidring (30) gebildet wird und die Manschette (10) gleichzeitig an der Öffnung (101) mit den Befestigungsmitteln (20) an der Innenseite und an der Außenseite der Öffnung (101) fixiert wird,
**dadurch gekennzeichnet, dass**
der hohle Abschnitt (17) in einem Inneren davon derart ausgebildet ist, um es zu ermöglichen, dass ein Saugrohr (2a) eines Fluid-Saugventils (2) durch diesen hindurch einsetzbar ist; eine Befestigungsöffnung (18) an einem Schraubverbindungsabschnitt (11) der Manschette (10) in einer Querrichtung des Schraubverbindungsabschnitts (11) derart ausgebildet ist, um es zu ermöglichen, dass das Druckluft-Injektionsventil (3) daran befestigbar ist; und eine Injektionsöffnung (19) an der Außenseite des hohlen Abschnitts (17) derart ausgebildet ist, dass sie mit der Befestigungsöffnung (18) in Verbindung steht, um es zu ermöglichen, dass Druckluft von dort aus injiziert wird.

2. Restöl-Entfernungsvorrichtung nach Anspruch 1, wobei die Manschette (10) aufweist:
einen oberen Körper (12), bei dem der Schraubverbindungsabschnitt (11) an einer Außenumfangsfläche desselben derart ausgebildet ist, dass er mit einer Bohrvorrichtung (200) koppelbar ist;
einen Manschetten-Einsetzabschnitt (15), der sich von dem oberen Körper (12) nach unten erstreckt und der eine Mehrzahl von Funktionsöffnungen (13) aufweist, die dazu eingerichtet sind, die Befestigungsmittel (20) daran zu befestigen; und
einen Schneidkopplungsabschnitt (16), der von einem Außenumfang des Manschetten-Einsetzabschnitts (15) stufenförmig nach innen derart gebildet ist, um es zu ermöglichen, dass der Schneidring (30) mit dem vorderen Endumfangsabschnitt des unteren Außenumfangsabschnitts der Manschette (10) koppelbar ist.

3. Restöl-Entfernungsvorrichtung nach Anspruch 2, wobei die Manschette (10) aufweist:
einen Schraubverbindungsabschnitt (17a), der an einer oberen Innenumfangsfläche des hohlen Abschnitts (17) derart ausgebildet ist, um es zu ermöglichen, dass das Fluid-Saugventil (2) mit diesem verbindbar ist; und
einen Schraubverbindungsabschnitt (18a), der an einer Innenumfangsfläche der Befestigungsöffnung (18) derart ausgebildet ist, um es zu ermöglichen, dass das Druckluft-Injektionsventil (3) mit diesem verbindbar ist.

4. Restöl-Entfernungsvorrichtung nach Anspruch 1 oder 2, wobei das Befestigungsmittel (20) aufweist:
eine Mehrzahl von Verriegelungselementen (21), die mit der Mehrzahl von Funktionsöffnungen (13) derart schwenkbar verbunden ist, dass sie in die Mehrzahl von Funktionsöffnungen (13) federnd einsetzbar oder aus diesen herausbewegbar ist;
elastische Federelemente (22), die zwischen den Verriegelungselementen (21) und den Funktionsöffnungen (13) derart angeordnet sind, dass sie die Verriegelungselemente (21) in den Funktionsöffnungen (13) federnd halten; und
eine Verriegelungsmutter (23) und eine Dichtung (24), die mit einem Außenumfang des Schraubverbindungsabschnitts (11) des oberen Körpers (12) gekoppelt sind, wenn der Manschetten-Einsetzabschnitt (15) an dem Innenumfang der Öffnung (101) arretiert ist, um den Arretierungszustand des Manschetten-Einsetzabschnitts (15) an der Außenseite des Ölbehälterkörpers (100) zu fixieren.

5. Restöl-Entfernungsvorrichtung nach Anspruch 4, wobei jedes Verriegelungselement (21) aufweist:
eine Schwenkverbindungsöffnung (21a), die an einem unteren Abschnitt desselben derart ausgebildet ist, dass sie mit der Stift-Öffnung (14) der entsprechenden Funktionsöffnung (13) mittels eines Stifts verbindbar ist;
einen Verriegelungsvorsprung (21b), der auf einer Seite von einem unteren Abschnitt desselben derart vorsteht, dass er an einem oberen Abschnitt der entsprechenden Funktionsöffnung (13) arretierbar ist, um veränderliche Vorgänge desselben zu begrenzen und zu verhindern, dass sich das Arretierungselement (21) aus der Funktionsöffnung (13) löst;
eine Verriegelungsfläche (21c), die an der Außenseite des oberen Abschnitts desselben derart ausgebildet ist, dass sie an einem Endumfang der Öffnung (101) arretierbar ist; und
eine Feder-Haltenut (21d), die in einem zentralen Bereich auf der anderen Seite desselben derart ausgebildet ist, um die elastische Feder (22) in diese einzusetzen und die elastische Feder (22) in dieser zu halten.

6. Restöl-Entfernungsvorrichtung nach Anspruch 1 oder 2, wobei der Schneidring (30) einen Schraubverbindungsabschnitt (31) aufweist, der an einer oberen Innenumfangsfläche desselben derart ausgebildet ist, dass er mit dem Schneidverbindungsabschnitt (16) der Manschette (10) verbindbar ist, und eine Mehrzahl von Messern (33) aufweist, die von dem unteren Endumfang desselben nach unten vorstehen, wobei der Schneidring (30) denselben Durchmesser (d1) hat wie der Manschetten-Einsetzabschnitt (15), sodass der Manschetten-Einsetzabschnitt (15), an dem die Befestigungsmittel (20) befestigt sind, in die Öffnung (101), die von dem Schneidring (30) gebildet wird, einsetzbar ist.

## Revendications

1. Dispositif d'enlèvement d'huile résiduelle pour enlever de l'huile résiduelle d'un navire en train de couler, comprenant :
un manchon (10) pouvant être inséré dans un corps de réservoir d'huile (100) de manière à permettre à de l'air comprimé d'être injecté dans le corps de réservoir d'huile pour décharger l'huile résiduelle du corps de réservoir d'huile (100), dans lequel le manchon (10) comprend une partie creuse (17) ;
un anneau de coupe (30) couplé à une périphérie extérieure inférieure du manchon (10) pour former un trou (101) sur le corps de réservoir d'huile (100) ; et
un moyen de fixation (20) adapté pour monter de manière fixe le manchon (10) sur le trou (101),
dans lequel le trou (101) est formé sur le corps de réservoir d'huile (100) au moyen de l'anneau de coupe (30) et simultanément, le manchon (10) est monté de manière fixe sur le trou (101) au moyen du moyen de fixation (20) sur l'intérieur et l'extérieur du trou (101),
**caractérisé en ce que**
la partie creuse (17) est formée dans un intérieur de celui-ci de manière à permettre à un tuyau d'aspiration (2a) d'une soupape d'aspiration de fluide (2) de passer à travers celle-ci par insertion ; un trou de fixation (18) est formé sur une partie de couplage à vis (11) du manchon (10) dans une direction latérale de la partie de couplage à vis (11) de manière à permettre à la soupape d'injection d'air comprimé (3) d'y être fixée ; et un trou d'injection (19) est formé à l'extérieur de la partie creuse (17) de manière à communiquer avec le trou de fixation (18) pour permettre à de l'air comprimé d'être injecté depuis celui-ci.

2. Dispositif d'enlèvement d'huile résiduelle selon la revendication 1, dans lequel le manchon (10) comprend :
un corps supérieur (12) ayant la partie de couplage à vis (11) formée sur une surface périphérique extérieure de celui-ci de manière à être couplée à une machine de forage (200) ;
une partie d'insertion de manchon (15) s'étendant vers le bas depuis le corps supérieur (12) et ayant une pluralité de trous de fonctionnement (13) adaptés pour monter un moyen de fixation (20) sur ceux-ci ; et
une partie de couplage à coupe (16) formée de manière étagée vers l'intérieur depuis une périphérie extérieure de la partie d'insertion de manchon (15) de manière à permettre à l'anneau de coupe (30) d'être couplé à la périphérie d'extrémité avant de la périphérie extérieure inférieure du manchon (10).

3. Dispositif d'enlèvement d'huile résiduelle selon la revendication 2, dans lequel le manchon (10) comprend :
une partie de couplage à vis (17a) formée sur une surface périphérique supérieure intérieure de la partie creuse (17) de manière à permettre à la soupape d'aspiration de fluide (2) d'y être couplée ; et
une partie de couplage à vis (18a) formée sur une surface périphérique intérieure du trou de fixation (18) de manière à permettre à la soupape d'injection d'air comprimé (3) d'y être couplée.

4. Dispositif d'enlèvement d'huile résiduelle selon la revendication 1 ou 2, dans lequel le moyen de fixation (20) comprend :
une pluralité de pièces de verrouillage (21) couplées par charnière à la pluralité de trous de fonctionnement (13) de manière à être insérées ou tirées élastiquement dans ou depuis la pluralité de trous de fonctionnement (13) ;
des ressorts élastiques (22) situés entre les pièces de verrouillage (21) et les trous de fonctionnement (13) de manière à supporter élastiquement les pièces de verrouillage (21) contre les trous de fonctionnement (13) ; et
un écrou de verrouillage (23) et un emballage (24) couplé à une périphérie extérieure de la partie de couplage à vis (11) du corps supérieur (12), si la partie d'insertion de manchon (15) est verrouillée sur une périphérie intérieure du trou (101), pour fixer l'état verrouillé de la partie d'insertion de manchon (15) sur l'extérieur du corps de réservoir d'huile (100).

5. Dispositif d'enlèvement d'huile résiduelle selon la revendication 4, dans lequel chaque pièce de verrouillage (21) comprend :
un trou de charnière (21a) formé sur une partie inférieure de celui-ci de manière à pouvoir être couplé au trou de goupille (14) du trou de fonctionnement (13) correspondant au moyen d'une goupille ;
une saillie de verrouillage (21b) faisant saillie depuis un côté d'une partie supérieure de celle-ci de manière à être verrouillée sur une partie supérieure du trou de fonctionnement (13) correspondant pour limiter des opérations modifiables de celle-ci et pour empêcher la pièce de verrouillage (21) de s'échapper du trou de fonctionnement (13) ;
une surface de verrouillage (21c) formée sur l'autre côté de la partie supérieure de celle-ci de manière à être verrouillée sur une périphérie d'extrémité du trou (101) ; et
une rainure de support élastique (21d) formée sur un centre de l'autre côté de celle-ci de manière à y insérer le ressort élastique (22) et à supporter élastiquement le ressort élastique (22) contre celle-ci.

6. Dispositif d'enlèvement d'huile résiduelle selon la revendication 1 ou 2, dans lequel l'anneau de coupe (30) comprend une partie de connexion à vis (31) formée sur une surface périphérique supérieure intérieure de celle-ci de manière à être couplée à la partie de couplage à coupe (16) du manchon (10) et une pluralité de lames (33) faisant saillie vers le bas depuis la périphérie d'extrémité de fond de celle-ci, l'anneau de coupe (30) ayant le même diamètre extérieur (d1) que la partie d'insertion de manchon (15) de sorte la partie d'insertion de manchon (15) sur laquelle le moyen de fixation (20) est monté soit insérée dans le trou (101) formé au moyen de l'anneau de coupe (30).
